# FASCICULE DE BREVET EUROPEEN

(11) **EP 3 495 266 B1**
(45) Date de publication et mention de la délivrance du brevet: **04.03.2020**
(21) Numéro de dépôt: 18206403.0
(22) Date de dépôt: 15.11.2018
(51) Int. Cl.: B64C 39/00, B64D 27/02, B64C 5/12

(54) **AVION À CONFIGURATION ÉVOLUTIVE EN VOL**
FLUGZEUG MIT EVOLUTIVER KONFIGURATION IM FLUG
AIRCRAFT WITH ADAPTIVE CONFIGURATION IN FLIGHT

(30) Priorité: 06.12.2017 FR 1761690
(43) Date de publication de la demande: 12.06.2019
(73) Titulaire: Airbus Operations (S.A.S.), 31060 Toulouse (FR)
(72) Inventeur: FAROUZ-FOUQUET, Mathias, 31300 Toulouse (FR)
(74) Mandataire: Gicquel, Olivier Yves Gérard

(56) Documents cités:
- EP-A1- 2 030 892
- WO-A1-2016/046787
- US-A- 3 735 946

## Description

### DOMAINE TECHNIQUE

La présente invention concerne un avion à configuration aérodynamique évolutive en vol.

### ETAT DE LA TECHNIQUE

La présente invention s'applique à un avion, en particulier un avion de transport, qui comporte notamment un fuselage, deux ailes, au moins deux moteurs agencés de part et d'autre d'un plan vertical de symétrie de l'avion, et des empennages arrière, horizontal et vertical, mettant en œuvre des fonctions usuelles de stabilité et de contrôle de l'attitude et de la trajectoire de l'avion.

On sait qu'en général, l'empennage horizontal d'un avion comprend une partie fixe et une partie mobile représentant une gouverne de profondeur, et l'empennage vertical comprend une partie fixe et une partie mobile représentant une gouverne de direction.

Une telle architecture usuelle d'avion à empennages (horizontal et vertical) arrière, comme dans le document US 3 735 946, présente des inconvénients. En particulier :
- en vol en croisière de l'avion, l'empennage vertical arrière contribue peu à l'aérodynamisme de l'avion et apporte du poids et de la traînée pour aucun avantage aérodynamique, économique ou de sécurité. Cet empennage vertical arrière est utilisé, principalement, durant les phases de décollage et d'atterrissage, lorsque des changements rapides dans la direction peuvent apparaître. Il est également très important lors d'un arrêt subit d'un moteur au cours du décollage. La gouverne de direction est alors activée par le pilote pour agir contre le déséquilibre de poussée. Par conséquent, l'empennage vertical arrière est uniquement utilisé pendant de courtes périodes de temps durant le vol, bien qu'il présente une surface importante, généralement de l'ordre de 10% de la surface d'aile ; et
- l'empennage horizontal arrière a pour but de contrecarrer à la fois le moment de tangage naturel des ailes, et la position du centre de gravité localisé à l'avant du centre de sustentation des ailes. Le plan horizontal arrière exerce une force vers le bas pour maintenir l'avion stable et en équilibre lors d'un vol. Il en découle une perte d'efficacité à la fois aérodynamique et économique. L'empennage horizontal arrière ne participe pas à la portance de l'avion. Au contraire, il la dégrade d'environ 5 %, tout en représentant de 15 % à 20 % de la surface d'aile.

La configuration d'un tel avion, qui est figée, n'est donc pas optimale dans toutes les phases de vol.

Dans le cadre de la présente invention, la configuration de l'avion dépend notamment des caractéristiques de l'empennage arrière et de la position du centre de gravité de l'avion.

### EXPOSÉ DE L'INVENTION

La présente invention a pour objet de remédier à cet inconvénient. Pour ce faire, elle concerne un avion, en particulier un avion de transport, qui comporte au moins un fuselage, deux ailes, un empennage arrière comprenant un empennage horizontal pourvu de deux extrémités d'empennage, et au moins deux moteurs agencés sur le fuselage de part et d'autre d'un plan vertical de symétrie de l'avion, ledit avion présentant un axe longitudinal.

Selon l'invention, lesdits moteurs sont montés de manière à pouvoir être déplacés, au moins en vol, sur ledit fuselage, sensiblement parallèlement à l'axe longitudinal, entre une position dite avant et une position dite arrière et lesdites extrémités d'empennage sont montées de manière à pouvoir être pivotées, au moins en vol, par rapport audit empennage horizontal, selon la revendication 1.

Ainsi, grâce à la capacité à la fois de déplacer les moteurs de l'avion et de faire pivoter les extrémités d'empennage, lors d'un vol, on dispose d'une possibilité de faire évoluer la configuration de l'avion en vol. Comme précisé ci-dessous, ceci permet notamment d'adapter la configuration de l'avion à la phase de vol courante, afin de tirer profit des différents éléments de l'empennage arrière (et ceci de manières différenciées) lors des diverses phases de vol.

Avantageusement, ledit avion présentant un centre de gravité et un centre de sustentation (des ailes), comporte au moins un mécanisme de déplacement apte à être commandé et configuré pour pouvoir amener chacun desdits moteurs, au moins en vol, alternativement dans l'une ou l'autre des deux positions stables suivantes, sur le fuselage :
- une position dite avant, dans laquelle le centre de gravité de l'avion est situé vers l'avant de l'avion par rapport à son centre de sustentation ; et
- une position dite arrière, positionnée vers l'arrière de l'avion par rapport à ladite position avant et dans laquelle le centre de gravité de l'avion est situé vers l'arrière de l'avion par rapport à son centre de sustentation.

En outre, de façon avantageuse, l'avion comporte également au moins un mécanisme de pivotement apte à être commandé et configuré pour pouvoir amener chacune des deux extrémités d'empennage, au moins en vol, alternativement dans l'une ou l'autre des deux positions stables suivantes :
- une première position dite repliée, dans laquelle les deux extrémités d'empennage sont agencées sensiblement orthogonalement à un plan général dudit empennage horizontal de manière à former un empennage vertical ; et
- une seconde position dite déployée, dans laquelle les deux extrémités d'empennage sont agencées sensiblement dans le plan général dudit empennage horizontal de manière à former avec l'empannage horizontal une surface d'empennage horizontal augmentée.

Dans le cadre de la présente invention, les mécanismes de déplacement et de pivotement peuvent être réalisés de différentes manières. Avantageusement, le mécanisme de déplacement peut comporter un système de coulissement ou un système d'articulation.

Par ailleurs, avantageusement, l'avion comporte de plus des surfaces de commande mobiles configurées pour agir sur le lacet de l'avion.

La présente invention s'applique aussi bien à des avions dont les moteurs sont des turboréacteurs (« turbojet » en anglais) ou des turbopropulseurs (« turbopropeller » en anglais), qu'à des avions dont les moteurs sont des moteurs à soufflante non carénée (« propfan » en anglais) ou à rotor non caréné (« open rotor » en anglais).

La présente invention concerne également un procédé de modification en vol d'une configuration d'un avion, ledit avion comportant au moins un fuselage, deux ailes, un empennage arrière comprenant un empennage horizontal pourvu de deux extrémités d'empennage, et au moins deux moteurs agencés sur le fuselage de part et d'autre d'un plan vertical de symétrie de l'avion, lesdits moteurs étant montés de manière à pouvoir être déplacés sur ledit fuselage, sensiblement parallèlement à un axe longitudinal de l'avion, et lesdites extrémités d'empennage étant montées de manière à pouvoir être pivotées par rapport audit empennage horizontal, selon la revndication 9.

Selon l'invention, ledit procédé de modification de la configuration de l'avion comprend :
- au moins une première étape consistant à amener lesdits moteurs dans une position dite avant et à amener lesdites extrémités d'empennage dans une position dite repliée dans laquelle les extrémités d'empennage sont agencées sensiblement orthogonalement à un plan général dudit empennage horizontal ; et
- au moins une seconde étape consistant à amener lesdits moteurs dans une position dite arrière déplacée vers l'arrière de l'avion par rapport à ladite position avant et à amener lesdites extrémités d'empennage dans une position dite déployée dans laquelle les extrémités d'empennage sont agencées sensiblement dans le plan général dudit empennage horizontal, lesdites première et seconde étapes étant mises en œuvre au moins lors d'un vol de l'avion.

De façon avantageuse, ladite première étape est mise en œuvre, au moins, lors d'une phase de décollage de l'avion et/ou lors d'une phase d'atterrissage de l'avion, et ladite seconde étape est mise en œuvre, au moins, lors d'une phase de vol en croisière de l'avion.

Ainsi :
- durant les phases de décollage et d'atterrissage, la configuration de l'avion est classique, avec les extrémités d'empennage agencées verticalement aux extrémités de l'empennage horizontal. De plus, comme les moteurs sont amenés dans la position avant, le centre de gravité de l'avion est situé à l'avant du centre de sustentation, et l'empennage horizontal (arrière) exerce une force vers le bas pour maintenir l'ensemble de l'avion en équilibre ;
- durant la ou les phases de vol en croisière, les moteurs sont déplacés vers l'arrière, dans la position arrière, ce qui entraîne un déplacement vers l'arrière du centre de gravité, qui se trouve alors à l'arrière du centre de sustentation principal de l'avion. L'empennage horizontal ainsi que les extrémités d'empennage deviennent une surface de portance et participent à la portance de l'avion. La stabilité en lacet, qui n'est pas aussi critique durant la phase de croisière que durant la phase de décollage et d'atterrissage, est également assurée par le déplacement vers l'arrière des moteurs.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique en perspective d'un avion pourvu de moteurs carénés, dans une première configuration ;
- la figure 2 est une vue schématique en perspective d'un avion pourvu de moteurs carénés, dans une seconde configuration ;
- les figures 3A, 3B et 3C illustrent schématiquement des vues en plan de l'avion se trouvant dans la configuration de la figure 1, respectivement en vue du dessus, en vue partielle de devant, et en vue latérale ;
- les figures 4A, 4B et 4C illustrent schématiquement des vues en plan de l'avion se trouvant dans la configuration de la figure 2, respectivement en vue du dessus, en vue partielle de devant, et en vue latérale ;
- les figures 5A et 5B illustrent schématiquement, en perspective, un moteur pourvu d'un mécanisme de déplacement, avec le moteur, respectivement, dans une position avant et dans une position arrière ;
- la figure 6 est une vue schématique, en perspective, qui montre un exemple de mécanisme de déplacement ;
- la figure 7 montre la queue de l'avion pourvu d'un moteur non caréné ; et
- la figure 8 est le schéma synoptique d'un procédé de modification de la configuration d'un avion.

### DESCRIPTION DÉTAILLÉE

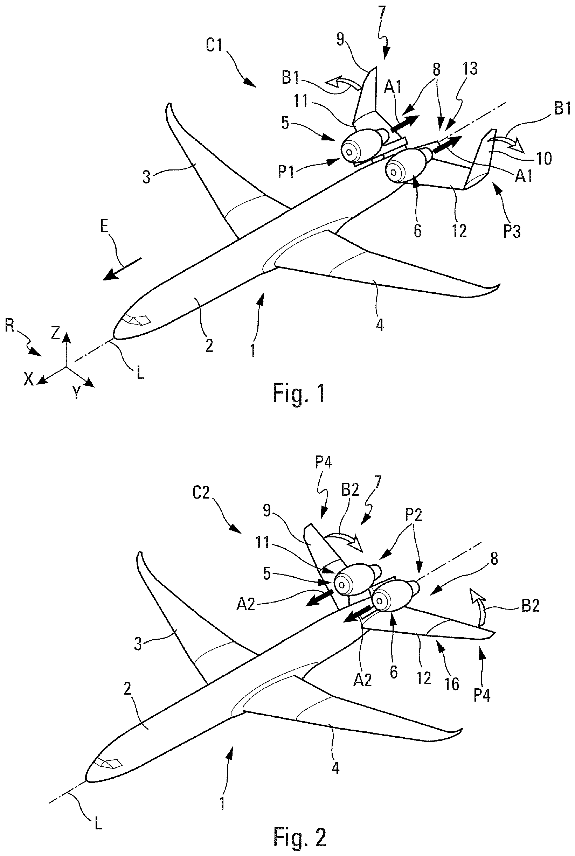

Les figures 1 et 2 montrent un avion 1, par exemple un avion de transport, présentant un axe longitudinal L, qui est représenté schématiquement dans un mode de réalisation particulier.

Pour faciliter la description, on a représenté sur la figure 1 un repère avion R usuel, comprenant trois directions principales, à savoir :
- une direction X dite longitudinale, parallèle à l'axe longitudinal L de l'avion 1 ;
- une direction Z dite verticale, perpendiculaire à la direction longitudinal X, le plan XZ formant un plan vertical de symétrie de l'avion 1 ; et
- une direction Y dite latérale, perpendiculaire audit plan XZ.

Sur la figure 1, on a également représenté un sens E de vol de l'avion 1. Dans la description suivante, les termes « avant » et « arrière » sont définis par rapport au sens E (c'est-à-dire vers l'avant ou vers l'arrière de l'avion 1). De même, les termes « haut » et « bas » sont définis par rapport au sens illustré par la flèche Z (c'est-à-dire vers le haut ou vers le bas de l'avion 1).

Cet avion 1 comporte, comme représenté notamment sur la figure 1 :
- un fuselage 2 allongé, d'axe longitudinal correspondant à l'axe longitudinal L;
- deux ailes 3 et 4 fixées de part et d'autre du fuselage 2 ;
- deux moteurs 5 et 6 agencés sur le fuselage 2 de part et d'autre du plan vertical de symétrie XZ de l'avion 1. Par moteur 5, 6, on entend à chaque fois l'ensemble formé des organes moteurs et d'une nacelle associée le cas échéant ; et
- un empennage arrière 7 comprenant un empennage horizontal 8 pourvu de deux extrémités d'empennage 9 et 10.

Dans l'exemple représenté sur la figure 1, l'empennage horizontal 8 est formé de deux parties d'empennage 11 et 12, de forme générale sensiblement plane, qui sont fixées de part et d'autre du fuselage 2 à proximité de la queue 13 de l'avion 1. Les extrémités d'empennage 9 et 10 sont agencées, respectivement, aux extrémités libres desdites parties d'empennage 11 et 12. Les extrémités d'empennage 9 et 10 représentent des surfaces de forme générale sensiblement plane. Les parties d'empennage 11 et 12 et les extrémités d'empennage 9 et 10 peuvent être pourvues de gouvernes usuelles (non représentées).

De plus, les moteurs 5 et 6 sont agencés sur le fuselage au niveau de l'empennage arrière 7, comme précisé ci-dessous.

Selon l'invention, et comme précisé ci-après :
- les moteurs 5 et 6 sont montés sur le fuselage 2 de manière à pouvoir être déplacés, au moins lors d'un vol de l'avion 1, sensiblement parallèlement à l'axe longitudinal L ; et
- les extrémités d'empennage 9 et 10 sont montées de manière à pouvoir être pivotées, également au moins lors d'un vol de l'avion 1, par rapport auxdites parties d'empennage 11 et 12 de l'empennage horizontal 8.

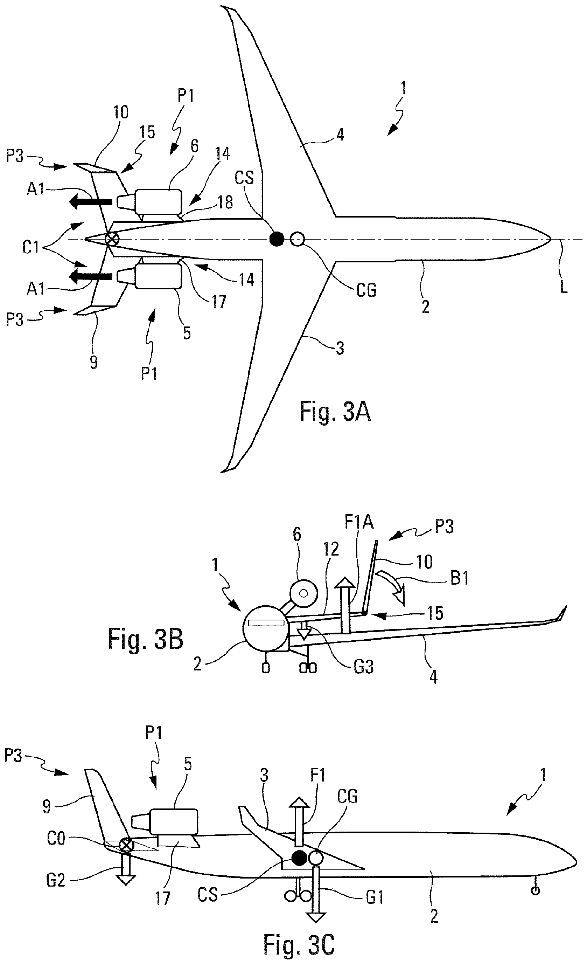

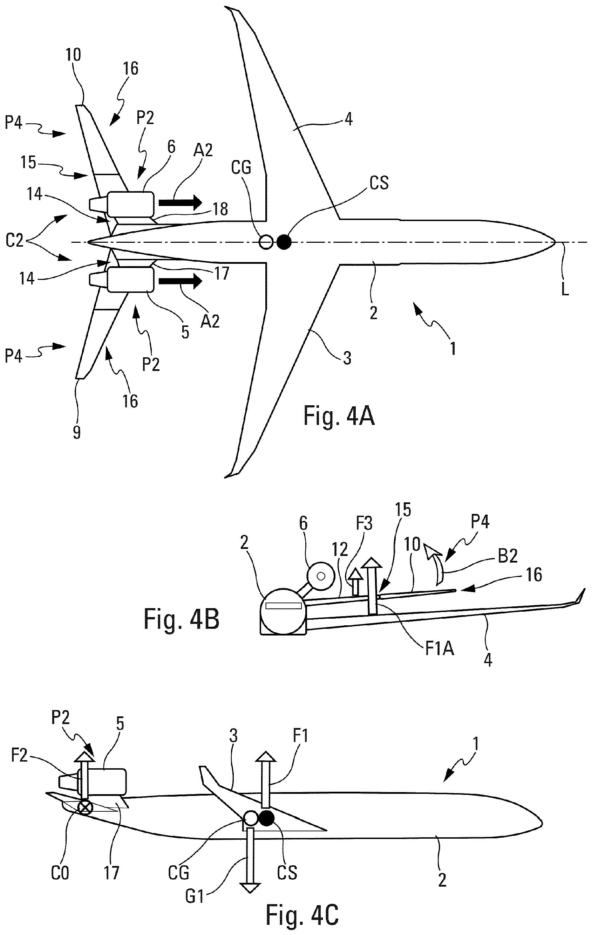

L'avion 1 comporte également un mécanisme de déplacement 14 (figures 3A et 4A). Ce mécanisme de déplacement 14 est apte à être commandé, par exemple par un ordre reçu d'un pilote de l'avion ou par un ordre reçu d'un système de pilotage automatique de l'avion.

Le mécanisme de déplacement 14 est configuré pour pouvoir amener sur le fuselage 2, l'ensemble des moteurs 5 et 6, lors d'un vol de l'avion 1 et également au sol, alternativement dans l'une ou l'autre de deux positions P1 et P2 stables.

La position P1 dite avant, est telle que le centre de gravité CG de l'avion 1 est situé vers l'avant de l'avion 1 par rapport au centre de sustentation CS (représentant le point d'application de la portance générée par les ailes 3 et 4), comme représenté sur les figures 3A et 3C. Sur la figure 3A, on a représenté une flèche F1 illustrant la portance générée par les ailes 3 et 4 de l'avion 1, qui est dirigée à partir du centre de sustentation CS de l'avion 1 vers le haut. On a également représenté sur cette figure 3C une flèche G1 illustrant le poids généré par la masse de l'avion 1, qui est dirigée à partir du centre de gravité CG de l'avion 1 vers le bas.

Quant à la position P2 dite arrière des moteurs 5 et 6, elle est positionnée vers l'arrière de l'avion 1 par rapport à la position avant P1, dans le sens illustré par des flèches A1 sur la figure 1. Dans cette position P2, le centre de gravité CG de l'avion 1 est situé vers l'arrière de l'avion 1 par rapport au centre de sustentation CS, comme représenté sur les figures 4A et 4C.

Par ailleurs, l'avion 1 comporte également un mécanisme de pivotement 15 (figures 3A, 4A et 4B). Ce mécanisme de pivotement 15 est apte à être commandé, par exemple par un ordre reçu d'un pilote de l'avion ou par un ordre reçu d'un système de pilotage automatique de l'avion.

Le mécanisme de pivotement 15 est configuré pour pouvoir amener l'ensemble des deux extrémités d'empennage 9 et 10, lors d'un vol de l'avion 1 et également au sol, alternativement dans l'une ou l'autre de deux positions P3 et P4 stables.

La position P3 dite repliée, est telle que les deux extrémités d'empennage 9 et 10 sont agencées sensiblement orthogonalement à un plan général formé par ledit empennage horizontal 8 (ou ses deux parties d'empennage 11 et 12), comme représenté sur la figure 1 et les figures 3A à 3C. Ce plan général peut être sensiblement parallèle à un plan XY. Dans cette position repliée P3, les deux extrémités d'empennage 9 et 10, de forme générale plane, sont sensiblement parallèles au plan XZ. Dans cette position repliée P3, les deux extrémités d'empennage 9 et 10 forment ainsi, ensemble, un empennage vertical arrière et elles sont aptes à remplir les fonctions usuelles d'un empennage vertical d'avion. Dans cette position repliée P3, l'empennage arrière 7 comporte donc un empennage horizontal 8 et un empennage vertical formé des extrémités d'empennage 9 et 10.

En outre, la position P4 dite déployée, est telle que les deux extrémités d'empennage 9 et 10 sont agencées sensiblement dans le plan général formé par ledit empennage horizontal 8 (ou ses deux parties d'empennage 11 et 12), comme représenté sur la figure 2 et les figures 4A à 4C. Dans cette position déployée P3, les deux extrémités d'empennage 9 et 10 forment avec l'empennage horizontal 8 une surface d'empennage horizontal augmentée 16. Grâce à cette surface d'empennage horizontal augmentée 16, l'avion 1 dispose d'une surface globale plus importante et donc plus efficace pour mettre en œuvre des fonctions usuelles d'un empennage horizontal d'avion et surtout pour participer à la portance, comme précisé ci-dessous.

Dans l'exemple des figures 1 et 3A à 3C, l'avion 1 se trouve dans une première configuration C1, dans laquelle les moteurs 5 et 6 sont dans la position avant P1 et les extrémités d'empennage 9 et 10 sont dans la position repliée P3.

Cette configuration C1 de l'avion qui est classique, est utilisée de préférence durant les phases de décollage et d'atterrissage de l'avion 1, comme précisé ci-dessous. Le centre de gravité CG est situé à l'avant du centre de sustentation CS, et l'empennage horizontal 8 exerce une force vers le bas, comme illustré par une flèche G2 sur la figure 3C à partir d'un point d'application C0 situé au niveau de la queue 13 de l'avion 1 (ou comme montré par la flèche G3 pour la partie d'empennage 12 sur la figure 3B) pour maintenir l'ensemble de l'avion 1 en équilibre. L'équilibre est obtenu par la combinaison des différentes forces illustrées par les flèches G1, G2 et F1. La flèche F1A sur la figure 3B montre la portance générée par l'aile 4.

Par ailleurs, dans l'exemple des figures 2 et 4A à 4C, l'avion 1 se trouve dans une seconde configuration C2, dans laquelle les moteurs 5 et 6 sont dans la position arrière P2 et les extrémités d'empennage 9 et 10 sont dans la position déployée P4.

Cette configuration C2 de l'avion 1 est utilisée, de préférence, durant un vol en croisière. Les moteurs 5 et 6 sont déplacés vers l'arrière, ce qui entraîne un déplacement vers l'arrière du centre de gravité CG, qui se trouve alors à l'arrière du centre de sustentation CS. La stabilité en lacet, qui n'est pas aussi critique durant les phases de croisière que dans les phases de décollage et d'atterrissage, est également assurée par le déplacement vers l'arrière des moteurs 5 et 6.

L'avion peut, en outre, comporter des surfaces de contrôle mobiles (non représentées) agencées sur les ailes 3 et 4 et/ou sur l'empennage arrière 7, pour réaliser automatiquement une correction additionnelle en lacet.

Dans cette configuration C2, le centre de gravité CG est situé à l'arrière du centre de sustentation CS, et l'empennage horizontal 8 exerce une force vers le haut, comme illustré par une flèche F2 sur la figure 4C à partir du point d'application C0 situé au niveau de la queue 13 de l'avion 1 (ou comme montré par la flèche F3 pour la partie d'empennage 12 sur la figure 4B) pour apporter une portance additionnelle, et ceci à l'aide d'une surface agrandie (à savoir ladite surface d'empennage horizontal agrandie 16).

Dans le cadre de la présente invention, le mécanisme de déplacement 14 et le mécanisme de pivotement 15 peuvent être réalisés de différentes manières, permettant de mettre en œuvre les fonctions de déplacement et de pivotement.

Chacun des moteurs 5 et 6 est agencé sur le fuselage 2 de l'avion 1 par l'intermédiaire d'un mât 17, 18 associé, comme représenté sur les figures 3A et 4A notamment. Dans un mode de réalisation préféré, le mécanisme de déplacement 14 est configuré pour agir au niveau des mâts 17 et 18.

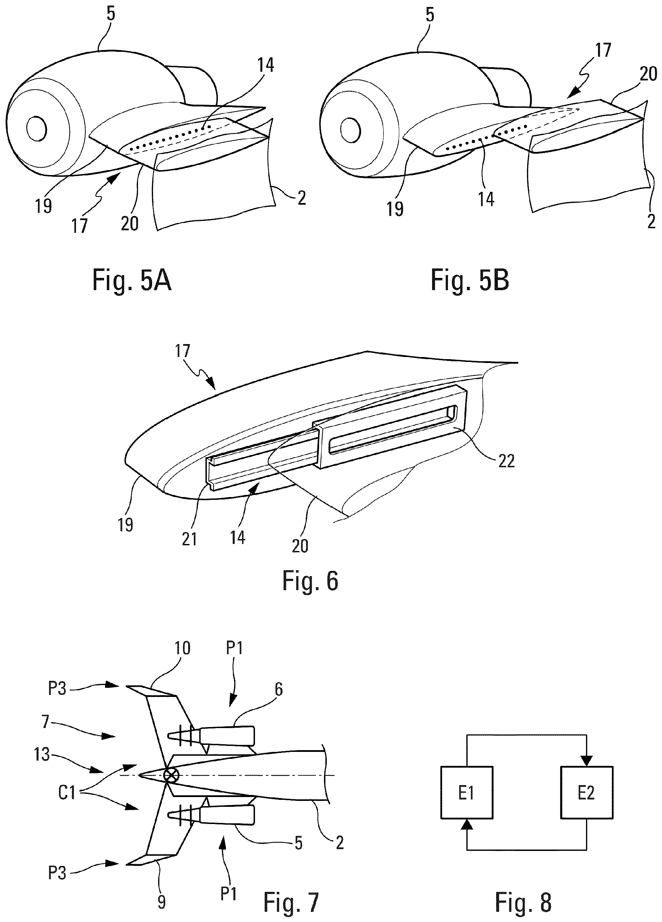

Dans l'exemple représenté schématiquement sur les figures 5A et 5B, le mât 17 est formé de deux parties 19 et 20, dont l'une 19 est fixée au moteur 5 et dont l'autre 20 est fixée au fuselage 2 de l'avion 1.

Dans cet exemple, le mécanisme de déplacement 14 est intégré dans le mât 17 entre les deux parties 19 et 20 et permet de générer un déplacement de l'une par rapport à l'autre et donc du moteur 5 par rapport au fuselage 2 entre une position arrière (figure 5A) et une position avant (figure 5B) du mât 17 et du moteur 6 auquel il est associé.

A titre d'illustration, le mécanisme de déplacement 14 peut comporter un système de coulissement 20, comme représenté schématiquement sur les figures 5A, 5B et 6. Dans cet exemple, le système coulissement 20 comporte un rail 21 fixé sur la partie 19 et un guide 22 fixé sur la partie 20, qui est susceptible de coulisser sur ce rail 21.

Dans une variante de réalisation (non représentée), le mécanisme de déplacement peut également comporter un système d'articulation.

La présente invention s'applique aussi bien à un avion dont les moteurs 5 et 6 sont des turboréacteurs (« turbojet » en anglais) ou des turbopropulseurs (« turbopropeller » en anglais), comme représenté sur les exemples des figures 1 à 4C, qu'à un avion dont les moteurs 5 et 6 sont des moteurs à soufflante non carénée (« propfan » en anglais) ou à rotor non caréné (« open rotor » en anglais), avec une simple propulsion ou une propulsion contrarotative sur chaque ensemble mât/moteur, comme montré schématiquement à titre d'illustration sur la figure 7 qui représente la queue 13 d'un avion 1 dans une vue similaire à celle de la queue de l'avion de la figure 3A.

La présente invention concerne également un procédé de modification de la configuration d'un avion 1 tel que celui décrit ci-dessus.

Ce procédé comprend, comme représenté sur la figure 8 :
- une étape E1 consistant à amener l'avion 1 dans la configuration C1 (figures 1 et 3A à 3C). Pour ce faire, cette étape E1 consiste :
   - d'une part, à amener les moteurs 5 et 6 dans la position avant P1 représentée sur les figures 1 et 3A à 3C, à l'aide du mécanisme de déplacement 14, et ceci à partir de la position arrière P2 représentée sur les figures 2 et 4A à 4C, dans le sens illustré par les flèches A2 sur les figures 2 et 4A ; et
   - d'autre part, à amener les extrémités d'empennage 9 et 10 dans la position repliée P3 représentée sur les figures 1 et 3A à 3C, à l'aide du mécanisme de pivotement 15, à partir de la position déployée P4 représentée sur les figures 2 et 4A à 4C, dans le sens illustré par les flèches B2 sur les figures 2 et 4B ;
- une étape E2 consistant à amener l'avion 1 dans la configuration C2 (figures 2 et 4A à 4C). Pour ce faire, cette étape E2 consiste :
   - d'une part, à amener les moteurs 5 et 6 dans la position arrière P2 représentée sur les figures 2 et 4A à 4C, à l'aide du mécanisme de déplacement 14, et ceci à partir de la position avant P1 représentée sur les figures 1 et 3A à 3C, dans le sens illustré par les flèches A1 sur les figures 1 et 3A ; et
   - d'autre part, à amener les extrémités d'empennage 9 et 10 dans la position déployée P4 représentée sur les figures 2 et 4A à 4C, à l'aide du mécanisme de pivotement 15, à partir de la position repliée P3 représentée sur les figures 1 et 3A à 3C, dans le sens illustré par les flèches B1 sur les figures 1 et 3B.

Les étapes E1 et E2 sont mises en œuvre, alternativement, lors d'un vol de l'avion 1. Le passage de l'une à l'autre de ces étapes E1 et E2, pour changer la configuration de l'avion 1, peut être commandé et réalisé plusieurs fois au cours d'un même vol. La commande de modification de configuration (ou d'activation de l'une ou l'autre des étapes E1 et E2), peut être générée par un pilote de l'avion ou par un système de pilotage automatique de l'avion.

L'étape E1 est mise en œuvre, au moins, lors d'une phase de décollage de l'avion et/ou lors d'une phase d'atterrissage de l'avion, et l'étape E1 est mise en œuvre, au moins, lors d'une phase de vol en croisière de l'avion.

En changeant la configuration de l'avion et la position du centre de gravité durant le vol, on est ainsi en mesure d'augmenter l'efficacité aérodynamique de l'avion 1, et de réduire la consommation de carburant. En outre, l'avion 1, tel que décrit ci-dessus, est en mesure, lorsqu'il se trouve dans la configuration C2, de voler à une altitude plus élevée que les altitudes de vol en croisière maximales usuelles.

L'avion 1, tel que décrit ci-dessus, présente de nombreux autres avantages.

En particulier, par la capacité de faire pivoter les parties d'empennage 9 et 10 :
- la surface de portance de l'avion 1 peut être augmentée, par exemple d'environ 10 %, avec une pénalité en masse faible due aux systèmes de déplacement et de pivotement 14 et 15 ;
- une réduction de la consommation de carburant est obtenue. En vol en croisière, l'empennage arrière 7 génère en effet, à l'aide des parties d'empennage 11 et 12 et des extrémités d'empennage 9 et 10, une force de portance, et l'avion peut voler à une attitude plus élevée ;
- l'augmentation de surface par le déploiement des parties d'empennage 9 et 10, permet de voler à une altitude plus élevée, sans augmentation de puissance et sans augmentation de la surface de l'aile principale formée par les ailes 3 et 4 (et donc sans augmentation de masse) ;
- les parties d'empennage 9 et 10 (formant, en position repliée, un empennage vertical arrière) deviennent une surface de portance lorsqu'elles sont déployées durant la phase de vol en croisière ;
- le plan horizontal arrière 7 complet devenant une surface de portance et non une surface appliquant une force vers le bas, peut être une surface laminaire.

L'avion 1, tel que décrit ci-dessus, présente également les avantages suivants :
- le déplacement vers l'arrière des moteurs augmente leur distance par rapport à la cabine de l'avion, et réduit ainsi le bruit dans la cabine ;
- durant les phases de décollage et d'approche, les extrémités d'empennage 9 et 10 en position verticale agissent comme des boucliers antibruit pour le bruit généré par les cônes de sortie des moteurs 5 et 6 ;
- pour des moteurs de type « open rotors », le déplacement vers l'arrière des moteurs pour le vol en croisière réduit de façon importante les vibrations et la fatigue générées ;
- si, lors d'un vol en croisière, une aube se détachait de la soufflante d'un moteur ou de l'hélice d'un moteur, elle n'aurait pas d'impact sur des zones vitales du fuselage, ce qui permet d'augmenter la sécurité globale de l'avion.

## Revendications

1. Avion comportant au moins un fuselage (2), deux ailes (3, 4), un empennage arrière (7) comprenant un empennage horizontal (8) pourvu de deux extrémités d'empennage (9, 10), et au moins deux moteurs (5, 6) agencés sur le fuselage (2) de part et d'autre d'un plan vertical (XZ) de symétrie de l'avion (1), ledit avion (1) présentant un axe longitudinal (L), **caractérisé en ce que** lesdits moteurs (5, 6) sont montés de manière à pouvoir être déplacés, au moins en vol, sur ledit fuselage (2), sensiblement parallèlement à l'axe longitudinal (L), entre une position (P1) dite avant et une position (P2) dite arrière et **en ce que** lesdites extrémités d'empennage (9, 10) sont montées de manière à pouvoir être pivotées, au moins en vol, par rapport audit empennage horizontal (8).

2. Avion selon la revendication 1, ledit avion (1) présentant un centre de gravité (CG) et un centre de sustentation (CS),
**caractérisé en ce qu'**il comporte au moins un mécanisme de déplacement (14) apte à être commandé et configuré pour pouvoir amener chacun desdits moteurs (5, 6), au moins en vol, alternativement dans l'une ou l'autre des deux positions (P1, P2) stables suivantes, sur le fuselage (2) :
- une position (P1) dite avant, dans laquelle le centre de gravité (CG) de l'avion (1) est situé vers l'avant de l'avion (1) par rapport au centre de sustentation (CS) ; et
- une position (P2) dite arrière, positionnée vers l'arrière de l'avion (1) par rapport à ladite position avant (P1) et dans laquelle le centre de gravité (CG) de l'avion (1) est situé vers l'arrière de l'avion (1) par rapport au centre de sustentation (CS).

3. Avion selon l'une des revendications 1 et 2,
**caractérisé en ce qu'**il comporte au moins un mécanisme de pivotement (15) apte à être commandé et configuré pour pouvoir amener chacune des deux extrémités d'empennage (9, 10), au moins en vol, alternativement dans l'une ou l'autre des deux positions (P3, P4) stables suivantes :
- une première position (P3) dite repliée, dans laquelle les deux extrémités d'empennage (9, 10) sont agencées sensiblement orthogonalement à un plan général dudit empennage horizontal (8) de manière à former un empennage vertical ; et
- une seconde position (P4) dite déployée, dans laquelle les deux extrémités d'empennage (9, 10) sont agencées sensiblement dans le plan général dudit empennage horizontal (8) de manière à former avec l'empannage horizontal (8) une surface d'empennage horizontal augmentée (16).

4. Avion selon la revendication 2,
**caractérisé en ce que** le mécanisme de déplacement (14) comporte un système de coulissement.

5. Avion selon la revendications 2,
**caractérisé en ce que** le mécanisme de déplacement (14) comporte un système d'articulation.

6. Avion selon l'une quelconque des revendications précédentes,
**caractérisé en ce qu'**il comporte de plus des surfaces de commande mobiles configurées pour agir sur le lacet de l'avion (1).

7. Avion selon l'une quelconque des revendications 1 à 6,
**caractérisé en ce que** lesdits moteurs (5, 6) sont des turboréacteurs ou des turbopropulseurs.

8. Avion selon l'une quelconque des revendications 1 à 6,
**caractérisé en ce que** lesdits moteurs (5, 6) sont des moteurs à soufflante non carénée ou à rotor non caréné.

9. Procédé de modification en vol d'une configuration d'un avion (1), ledit avion (1) comportant au moins un fuselage (2), deux ailes (3, 4), un empennage arrière (7) comprenant un empennage horizontal (8) pourvu de deux extrémités d'empennage (9, 10), et au moins deux moteurs (5, 6) agencés sur le fuselage (2) de part et d'autre d'un plan vertical (XZ) de symétrie de l'avion (1), lesdits moteurs (5, 6) étant montés de manière à pouvoir être déplacés sur ledit fuselage (2), sensiblement parallèlement à un axe longitudinal (L) de l'avion (1), et lesdites extrémités d'empennage (9, 10) étant montées de manière à pouvoir être pivotées par rapport audit empennage horizontal (8),
procédé **caractérisé en ce qu'**il comprend :
- au moins une première étape (E1) consistant à amener lesdits moteurs (5, 6) dans une position (P1) dite avant et à amener lesdites extrémités d'empennage (9, 10) dans une position (P3) dite repliée dans laquelle lesdites extrémités d'empennage (9, 10) sont agencées sensiblement orthogonalement à un plan général dudit empennage horizontal (8) ; et
- au moins une seconde étape (E2) consistant à amener lesdits moteurs (5, 6) dans une position (P2) dite arrière, déplacée vers l'arrière de l'avion (1) par rapport à ladite position avant (P1) et à amener lesdites extrémités d'empennage (9, 10) dans une position (4) dite déployée dans laquelle lesdites extrémités d'empennage (9, 10) sont agencées sensiblement dans le plan général dudit empennage horizontal (8),
lesdites première et seconde étapes (E1, E2) étant mises en œuvre alternativement au moins lors d'un vol de l'avion (1).

10. Procédé selon la revendication 9,
**caractérisé en ce que** ladite première étape (E1) est mise en œuvre, au moins, lors d'une phase de décollage de l'avion (1) et/ou lors d'une phase d'atterrissage de l'avion (1), et **en ce que** ladite seconde étape (E2) est mise en œuvre, au moins, lors d'une phase de vol en croisière de l'avion (1).

## Patentansprüche

1. Flugzeug, das mindestens einen Rumpf (2), zwei Flügel (3, 4), ein Heckleitwerk (7), das ein mit zwei Leitwerkenden (9, 10) versehenes waagrechtes Leitwerk (8) enthält, und mindestens zwei Motoren (5, 6) aufweist, die am Rumpf (2) zu beiden Seiten einer senkrechten Symmetrieebene (XZ) des Flugzeugs (1) angeordnet sind, wobei das Flugzeug (1) eine Längsachse (L) aufweist,
**dadurch gekennzeichnet, dass** die Motoren (5, 6) so montiert sind, dass sie zumindest im Flug auf dem Rumpf (2) im Wesentlichen parallel zur Längsachse (L) zwischen einer so genannten vorderen Stellung (P1) und einer so genannten hinteren Stellung (P2) verschoben werden können, und dass die Leitwerkenden (9, 10) so montiert sind, dass sie zumindest im Flug bezüglich des waagrechten Leitwerks (8) geschwenkt werden können.

2. Flugzeug nach Anspruch 1, wobei das Flugzeug (1) einen Schwerpunkt (CG) und ein Auftriebszentrum (CS) aufweist,
**dadurch gekennzeichnet, dass** es mindestens einen Verschiebemechanismus (14) aufweist, der gesteuert werden kann und konfiguriert ist, jeden der Motoren (5, 6), zumindest im Flug, alternativ in die eine oder andere der folgenden zwei stabilen Positionen (P1, P2) auf dem Rumpf (2) bringen zu können:
- eine so genannte vordere Position (P1), in der der Schwerpunkt (CG) des Flugzeugs (1) sich bezüglich des Auftriebszentrums (CS) zur Vorderseite des Flugzeugs (1) hin befindet; und
- eine so genannte hintere Position (P2), die bezüglich der vorderen Position (P1) zur Rückseite des Flugzeugs (1) hin positioniert ist und in der der Schwerpunkt (CG) des Flugzeugs (1) sich bezüglich des Auftriebszentrums (CS) zur Rückseite des Flugzeugs (1) hin befindet.

3. Flugzeug nach einem der Ansprüche 1 und 2, **dadurch gekennzeichnet, dass** es mindestens einen Schwenkmechanismus (15) aufweist, der gesteuert werden kann und konfiguriert ist, jedes der zwei Leitwerkenden (9, 10), zumindest im Flug, alternativ in die eine oder andere der folgenden zwei Positionen (P3, P4) bringen zu können:
- eine so genannte angewinkelte erste Position (P3), in der die zwei Leitwerkenden (9, 10) im Wesentlichen orthogonal zu einer allgemeinen Ebene des waagrechten Leitwerks (8) angeordnet sind, um ein senkrechtes Leitwerk zu bilden; und
- eine so genannte ausgestreckte zweite Position (P4), in der die zwei Leitwerkenden (9, 10) im Wesentlichen in der allgemeinen Ebene des waagrechten Leitwerks (8) angeordnet sind, um mit dem waagrechten Leitwerk (8) eine vergrößerte Fläche eines waagrechten Leitwerks (16) zu bilden.

4. Flugzeug nach Anspruch 2, **dadurch gekennzeichnet, dass** der Verschiebemechanismus (14) ein Gleitsystem aufweist.

5. Flugzeug nach Anspruch 2, **dadurch gekennzeichnet, dass** der Verschiebemechanismus (14) ein Gelenksystem aufweist.

6. Flugzeug nach einem der vorhergehenden Ansprüche, **dadurch gekennzeichnet, dass** es außerdem bewegliche Steuerflächen aufweist, die konfiguriert sind, auf die Gierbewegung des Flugzeugs (1) einzuwirken.

7. Flugzeug nach einem der Ansprüche 1 bis 6, **dadurch gekennzeichnet, dass** die Motoren (5, 6) Turbostrahltriebwerke oder Turboprop-Triebwerke sind.

8. Flugzeug nach einem der Ansprüche 1 bis 6, **dadurch gekennzeichnet, dass** die Motoren (5, 6) Motoren mit mantellosem Gebläse oder mit mantellosem Rotor sind.

9. Verfahren zur Veränderung einer Konfiguration eines Flugzeugs (1) im Flug, wobei das Flugzeug (1) mindestens einen Rumpf (2), zwei Flügel (3, 4), ein Heckleitwerk (7), das ein mit zwei Leitwerkenden (9, 10) versehenes waagrechtes Leitwerk (8) enthält, und mindestens zwei Motoren (5, 6) aufweist, die am Rumpf (2) zu beiden Seiten einer senkrechten Symmetrieebene (XZ) des Flugzeugs (1) angeordnet sind, wobei die Motoren (5, 6) so montiert sind, dass sie auf dem Rumpf (2) im Wesentlichen parallel zu einer Längsachse (L) des Flugzeugs (1) verschoben werden können, und die Leitwerkenden (9, 10) so montiert sind, dass sie bezüglich des waagrechten Leitwerks (8) geschwenkt werden können,
wobei das Verfahren **dadurch gekennzeichnet ist, dass** es enthält:
- mindestens einen ersten Schritt (E1), der darin besteht, die Motoren (5, 6) in eine so genannte vordere Position (P1) zu bringen und die Leitwerkenden (9, 10) in eine so genannte angewinkelte Position (P3) zu bringen, in der die Leitwerkenden (9, 10) im Wesentlichen orthogonal zu einer allgemeinen Ebene des waagrechten Leitwerks (8) angeordnet sind; und
- mindestens einen zweiten Schritt (E2), der darin besteht, die Motoren (5, 6) in eine so genannte hintere Position (P2) zu bringen, die bezüglich der vorderen Position (P1) zur Rückseite des Flugzeugs (1) verschoben ist, und die Leitwerkenden (9, 10) in eine so genannte ausgestreckte Position (4) zu bringen, in der die Leitwerkenden (9, 10) im Wesentlichen in der allgemeinen Ebene des waagrechten Leitwerks (8) angeordnet sind,
wobei die ersten und zweiten Schritte (E1, E2) mindestens bei einem Flug des Flugzeugs (1) alternativ durchgeführt werden.

10. Verfahren nach Anspruch 9, **dadurch gekennzeichnet, dass** der erste Schritt (E1) mindestens bei einer Startphase des Flugzeugs (1) und/oder bei einer Landephase des Flugzeugs (1) durchgeführt wird, und dass der zweite Schritt (E2) mindestens bei einer Reiseflugphase des Flugzeugs (1) durchgeführt wird.

## Claims

1. Aeroplane comprising at least one fuselage (2), two wings (3, 4), a tail unit (7) comprising a horizontal stabilizer (8) provided with two stabilizer ends (9, 10), and at least two engines (5, 6) arranged on the fuselage (2) on either side of a vertical plane (XZ) of symmetry of the aeroplane (1), said aeroplane (1) having a longitudinal axis (L), **characterized in that** said engines (5, 6) are mounted such that they can be moved, at least in flight, on said fuselage (2), essentially parallel to the longitudinal axis (L), between a "forward" position (P1) and a "rear" position (P2), and **in that** said stabilizer ends (9, 10) are mounted such that they can be pivoted, at least in flight, relative to said horizontal stabilizer (8).

2. Aeroplane according to Claim 1, said aeroplane (1) having a centre of gravity (CG) and a centre of lift (CS),
**characterized in that** it comprises at least one controllable displacement mechanism (14) configured to be able to bring each one of said engines (5, 6), at least in flight, alternatively to one or other of the following two stable positions (P1, P2), on the fuselage (2):
- a "forward" position (P1) in which the centre of gravity (CG) of the aeroplane (1) is located towards the front of the aeroplane (1) with respect to the centre of lift (CS), and
- a "rear" position (P2), positioned towards the rear of the aeroplane (1) relative to said forward position (P1) and in which the centre of gravity (CG) of the aeroplane (1) is located towards the rear of the aeroplane (1) with respect to the centre of lift (CS).

3. Aeroplane according to either of Claims 1 and 2, **characterized in that** it comprises at least one controllable pivoting mechanism (15) configured to be able to bring each one of the two stabilizer ends (9, 10), at least in flight, alternatively to one or other of the following two stable positions (P3, P4):
- a first, "folded" position (P3) in which to stabilizer ends (9, 10) are arranged essentially orthogonal to a general plane of said horizontal stabilizer (8) so as to form a vertical stabilizer; and
- a second, "deployed" position (P4) in which the two stabilizer ends (9, 10) are arranged essentially in the general plane of said horizontal stabilizer (8) so as to form, with the horizontal stabilizer (8), an enlarged horizontal stabilizer surface (16) .

4. Aeroplane according to Claim 2,
**characterized in that** the displacement mechanism (14) comprises a sliding system.

5. Aeroplane according to Claim 2,
**characterized in that** the displacement mechanism (14) comprises an articulation system.

6. Aeroplane according to any one of the preceding claims,
**characterized in that** it further comprises movable control surfaces configured to act on the yaw of the aeroplane (1).

7. Aeroplane according to any one of Claims 1 to 6,
**characterized in that** said engines (5, 6) are jet engines or turboprops.

8. Aeroplane according to any one of Claims 1 to 6,
**characterized in that** said engines (5, 6) are un-ducted fan engines or un-ducted rotor engines.

9. Method for modifying in-flight a configuration of an aeroplane (1), said aeroplane (1) comprising at least one fuselage (2), two wings (3, 4), a tail unit (7) comprising a horizontal stabilizer (8) provided with two stabilizer ends (9, 10), and at least two engines (5, 6) arranged on the fuselage (2) on either side of a vertical plane (XZ) of symmetry of the aeroplane (1), said engines (5, 6) being mounted such that they can be moved on said fuselage (2), essentially parallel to a longitudinal axis (L) of the aeroplane (1), and said stabilizer ends (9, 10) being mounted such that they can be pivoted relative to said horizontal stabilizer (8),
which method is **characterized in that** it comprises:
- at least a first step (E1) consisting in bringing said engines (5, 6) into a "forward" position (P1) and in bringing said stabilizer ends (9, 10) into a "folded" position (P3) in which said stabilizer ends (9, 10) are arranged essentially orthogonal to a general plane of said horizontal stabilizer (8); and
- at least a second step (E2) consisting in bringing said engines (5, 6) into a "rear" position (P2), which position is shifted towards the rear of the aeroplane (1) relative to said forward position (PI), and in bringing said stabilizer ends (9, 10) into a "deployed" position (4) in which said stabilizer ends (9, 10) are arranged essentially in the general plane of said horizontal stabilizer (8),
said first and second steps (E1, E2) being implemented alternately at least during a flight of the aeroplane (1).

10. Method according to Claim 9,
**characterized in that** said first step (E1) is implemented at least during a takeoff phase of the aeroplane (1) and/or during a landing phase of the aeroplane (1), and **in that** said second step (E2) is implemented at least during a cruising flight phase of the aeroplane (1).
